(19) Europäisches Patentamt / European Patent Office / Office européen des brevets

(11) **EP 3 335 092 B1**

(12) **EUROPEAN PATENT SPECIFICATION**

(45) Date of publication and mention
of the grant of the patent:
**06.10.2021 Bulletin 2021/40**

(21) Application number: **16763204.1**

(22) Date of filing: **16.08.2016**

(51) Int Cl.:
**G05D 23/19** *(2006.01)*     **F24H 9/20** *(2006.01)*
**F24H 1/20** *(2006.01)*

(86) International application number:
**PCT/EP2016/069416**

(87) International publication number:
**WO 2017/029285 (23.02.2017 Gazette 2017/08)**

(54) **APPARATUS FOR MANAGING HOT WATER IN A HOT WATER STORAGE TANK HEATING SYSTEM AND ASSOCIATED METHOD**

VORRICHTUNG ZUR VERWALTUNG VON WARMWASSER IN EINEN WARMWASSERSPEICHERHEIZSYSTEM UND ZUGEHÖRIGES VERFAHREN

APPAREIL PERMETTANT DE GÉRER L'EAU CHAUDE DANS UN SYSTÈME DE CHAUFFAGE DE RÉSERVOIR DE STOCKAGE D'EAU CHAUDE ET PROCÉDÉ ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.08.2015 IE 20150266**

(43) Date of publication of application:
**20.06.2018 Bulletin 2018/25**

(73) Proprietor: **Climote Limited**
**Dundalk A91 PCK2 (IE)**

(72) Inventor: **RODDY, Ivor**
**Dundalk A91 PCK2 (IE)**

(74) Representative: **MacLachlan & Donaldson**
**Unit 10, 4075 Kingswood Road**
**Citywest Business Campus**
**Dublin D24 C56E (IE)**

(56) References cited:
**EP-A2- 2 051 016      WO-A1-2012/069497**
**WO-A2-2012/069815      US-A- 4 568 821**
**US-A1- 2010 004 790      US-A1- 2013 197 827**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to apparatus and method for managing hot water in a hot water storage tank heating system.

The invention enables the management of hot water in a hot water storage tank by tracking the temperature profile of the water within the tank (often referred to as stratification). A conventional way to do this is to put temperature sensors along the length of the tank. However, with modern tanks, insulation is often built on to the tank making it very difficult to do this effectively and also has practical complications due to location of tank etc.

WO2012/069497 is directed towards an electricity supply management system for a terminal user facility connected to an electrical power supply grid, the terminal user facility comprising an energy storage device with means for monitoring one or more operating parameters of the energy storage device; the monitoring means being connected to a controller which is operably connected to the energy storage device for controlling operation of the energy storage device; wherein the controller comprises a self-learning algorithm that can determine the operating characteristics of the energy storage device connected thereto so as to improve the efficiency of the electricity supply management system by adapting the response of the electricity supply management system in accordance with the determined operating characteristics of the energy storage device.

WO2010/069815 relates to apparatus and methods for monitoring a hot water tank of a hot water heating system. The apparatus comprises at least two tank temperature sensors for sensing the temperature at least two different tank heights and generating respective sensor signals in response to the sensed temperatures; a processing arrangement configured to receive the tank sensor signals, determine therefrom a hot water level parameter value which is indicative of the proportion of the total volume of water in the tank which is above a predetermined temperature threshold, and output the hot water level parameter value; and an electronic memory for receiving and storing the hot water level parameter value.

US 2010/004790 relates to system for shifting energy demand from on-peak time windows to off-peak time windows by using hot water heater load shifting, while providing the end user with the level of service (i.e., availability of hot water) according to the user's customary use described by service quality criteria. The shift is accomplished by a controller located at the end user establishment and in communication with a central control server. The controller monitors local water heater upper and/or lower temperature and controls upper and/or lower water heater heating elements in accordance with a demand shift process commanded by the central control server.

US 2013/197827 discloses an apparatus and method for determining the volume of hot water dispensed during a given timeframe from a hydrocarbon fuelled water heater based on the volume of fuel consumed by the water heater during the timeframe and the average temperature difference between the inlet water temperature and the outlet water temperature during the timeframe.

US 4,568,821 is concerned with an apparatus and method for controlling a domestic hot water heater system in which the actual temperature of the water in the storage tank of the system is continuously measured and the measured water temperature is continuously displayed at a location remote from the water heater. There are control means located at a remote location for actuating energizing means at the water heater for heating the water. The energizing means is actuated by the person intending to use the heated water on the basis of the measured temperature of the water displayed at the continuous display at the time of measurement and the intended use of the water.

EP 2051016 relates to a storage type hot water supply system including a hot water storage tank for storing hot and cold water; a heat pump unit for heating the hot and cold water fed from the hot water storage tank ; a water intake tube body provided in the hot water storage tank while extended in an upper and lower direction, for guiding the hot and cold water to the exterior; and a hot water tap to which the hot and cold water taken out to the exterior of the hot water storage tank is guided, and is characterized in that the water intake tube body is provided with at least an upper water-intake hole formed near a top of the hot water storage tank and an intermediate water-intake hole formed lower than the upper water-intake hole.

The apparatus of the present invention being claimed can provide a management of hot water functionality by only monitoring the temperature at the outlet pipe and using software to calculate the temperature profile in the tank based on known and discovered properties of the tank.

The invention is more particularly defined in the appended claims which are incorporated in this description by reference.

The invention will hereinafter be more particularly described with reference to the accompanying drawings which show, by way of example only, a number of embodiments of an apparatus and method for managing hot water in a hot water storage tank heating system in accordance with the invention.

Brief Description of the Drawings

Figure 1 outlines the key components of a hot water tank including the outlet pipe, the pipe insulation and one embodiment of a temperature sensor enclosure;

Figure 2 illustrates the hot water outlet pipe with one embodiment of the temperature sensor mounting bracket in its open position;

Figure 3 illustrates one embodiment of the sensor mounting platform;

Figure 4 details the enclosure in the open position;

Figure 5 shows a sectional view of a typical hot water storage tank with a hot water outlet pipe with one embodiment of the temperature sensor mounting bracket attached;

Figure 6 shows a number of different mounting options for different fitting layouts;

Figure 7 shows two embodiments of the invention one showing an embodiment with a display interface panel and another embodiment showing a battery powered version;

Figure 8 shows an example of a typical immersion element;

Figure 9 shows one embodiment of the invention where a current clamp is attached inside the immersion enclosure;

Figure 10 illustrates one embodiment of the invention which depicts the communication between the invention and a control apparatus using power line communications;

Figure 11 illustrates one embodiment of the invention which shows a communication cable feeding directly to a remote controlled apparatus;

Figure 12 illustrates two additional embodiments of a temperature sensor mounting apparatus including one sensor platform that mounts directly in to the pipe lagging;

Figure 13 outlines some alternative components of a temperature sensor enclosure including spring clip mechanism that engages with an outlet pipe, mounting platforms, ultra sonic detectors and heat sinks;

Figure 14 outlines some key optional features of a wall mounted user interface;

Figure 15 illustrates one embodiment of a user interface for viewing and scheduling hot water;

Figure 16 shows one embodiment a mobile user interface;

Fig 17 is a flowchart illustrating the key steps in a first embodiment of program used to operate the system; and

Fig 18 shows a model of a tank with discrete slices along the length of the tank so that each section resembles a disc with a given volume of water.

The apparatus comprises a mounting bracket for attaching to the outlet pipe of the hot water tank, the bracket being arranged to hold one or more temperature sensors, the sensors being arranged to provide temperature signals from the hot tank outlet, a computer implemented processing arrangement locally or remotely configured to receive the temperature sensor signals, wherein the processing arrangement is arranged to run one or more processing means to establish the temperature distribution within the tank and an interface to interface with a user or additional processors either locally or remotely.

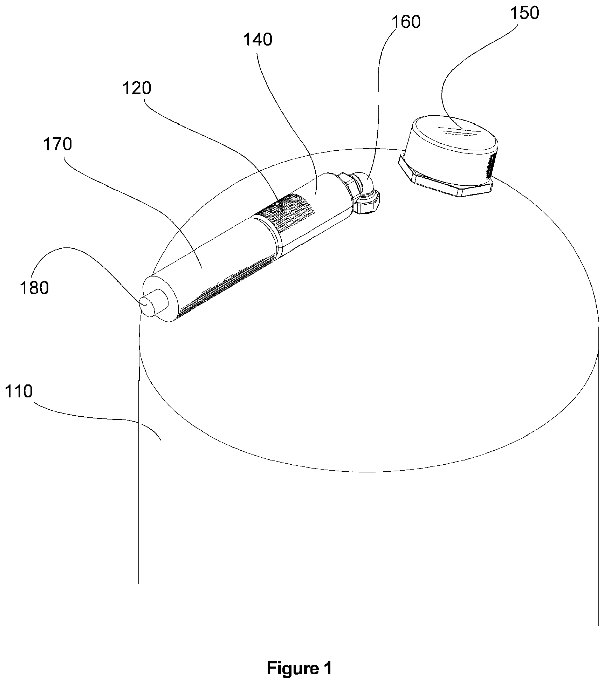

Figure 1 shows one embodiment of the apparatus where the mounting bracket is attached to the outlet pipe of the hot water tank. The bracket is arranged to hold one or more temperature sensors. The sensors are arranged to provide a processing means with temperature sensor signals from the hot tank outlet. The processing means is arranged to run a number of processing methods to establish the temperature distribution within the tank.

Having sensors fitted only on the outlet pipe gives considerable advantages over an arrangement comprising sensors along the length of the tank, particularly with modern tanks, that have insulation incorporated onto the skin of the tank making it very difficult and essentially unfeasible to directly mount sensors to accurately measure the temperature at different heights in the tank.

The method incorporated in the processing element models the tank as discrete uniform elements along its vertical axis. The properties of the water in the aforementioned elements is presumed to be uniform across the element. Empirical stratification models have been developed for different tank geometries and energy sources. Energy input levels can be directly measured using a current transformer with the processing element configured to receive signal from current transformer.

Alternatively, power levels of each heating element can be input as fundamental properties of the system for incorporation into the method.

The dynamic characteristics of the temperature recorded by the temperature sensor closest to the top of tank sensor 315, together with information on energy source (either sensed or input as a characteristic), can be used to determine energy stratification from energy source to discrete elements within the tank allowing a profile model within the tank to be recursively developed over time.

After an indirect energy source has been used, a full or partial discharge cycle of the system will allow energy input from said source to be determined for future use in the stratification model. Energy losses from the tank will be dependent on various characteristics of the system and environment such as temperature delta between ambient and elements, thickness and properties of insulation etc. The processing element uses a lower bandwidth dynamic property of the temperature at location T1 to establish the energy storage properties of the tank and updates the energy storage of each sub element accordingly.

In addition, the loss rate from the tank is dependent on the energy storage density in the tank i.e. a smaller volume of water will cool faster than a larger volume of water stored at the same temperature This characteristic can be used by the system to determine key performance characteristics of the system.

The largest source of energy loss from the system will be when hot water is drawn from the system. The outlet pipe will have a slight temperature difference to the top temperature of the tank, due to the cooling effect of ambient air on the outlet pipe. When water is drawn from the system, the outlet pipe will momentarily experience a temperature rise which the processing element uses to detect water being drawn from the system.

To improve accuracy, a second sensor 312 is spaced from first sensor 315 along the outlet pipe and cooling features 311 are provided around the second sensor 312 (T2), which will promote a larger temperature delta across the outlet monitoring bracket thereby increasing accuracy.

The processing element will use the temperature delta to identify when water is being drawn from the system. Once water stops flowing the outlet pipe will again cool allowing the processing element to detect when water flow has ceased. Again, accuracy is improved by incorporating the second temperature sensor such that temperature deltas are increased.

The rate at which the temperatures converge can be used to help ascertain the flow rate through the pipe.

As water is drawn from the system, which will be from the highest sub element of the system, cold water is drawn into the system, at the lowest sub element. Internal energy transfer within the system will be in a vertical direction from sub element to sub element which the processing element incorporates into the aforementioned stratification model such that the resultant model will have incorporated the energy drawn from the system and the impact that it will have had on the energy stratification within the system.

$$\text{Element(x)\_t(0)} = \text{element(x)\_t(-1)*Loss\_rate} + [\text{element(x+1)\_t(-1)} - \text{element(x)\_t(-1)}]\text{*flow}$$

Where

Element(x)_t(0) is the current energy storage above 0°C for any sub element of the tank

Element(x)_t(-1) is the energy storage above ambient for the current sub element calculated in the previous predefined period

Element(x+1)_t(-1) is the energy storage in the sub element below element x in the previous predefined period

Flow = flow rate from system

Loss_rate = inefficiency rating of tank

The iterative method incorporated in the processing element will therefore maintain a real time representation of energy storage of each sub element of the hot tank system. Applying the specific heat capacity property of water to the method allows the profile to be converted to temperature of each sub section. Once the desired water temperature is known, the available hot water can be determined by calculating volume of ambient water to be added to each sub element in order to deliver water at the required temperature thereby calculating the total potential capacity of useful hot water.

$$L = \sum_{sec=1}^{n} \text{if}(T(\text{sec}) > Tu, Ls * (T(\text{sec}) - Tu)/(Tu - Ta))$$

Where

L = total useful litres available
Sec = section number
T(sec) = temperature of sub section
Tu = predefined temperature of required water
Ls = capacity of each sub section
Ta = temperature of cold water feed

This allows the system to report to the user in real time the available capacity of hot water.

The empirical stratification models are used to recursively predict future stratification profiles within the tank when different energy sources are enabled. The processing element incorporates an input mechanism from the user to request a fixed amount of hot water. The processing element recursively predicts the stratification in the tank based on each heating source to deliver the said volume of water and makes a decision on which heating source to engage and what rate to deliver said volume of water based on either minimising energy usage, speed of delivery or cost of delivery, depending on which is considered a higher priority.

The processing element will control the energy source as required, and monitor system performance to provide closed feedback control and notify the user when the required volume of water is available. This functionality provides considerable advantages to the end user as the user can interact with the system by requesting volumes of water and the system intelligently manages the system to deliver the required amount of water as quickly as possible or with minimum amount of waste.

The processing element will also incorporate a remote communications element which will allow the system to receive requests or commands remotely. This allows the system to act as an element in a macro system where multiple systems can be controlled together for grid management purposes. An example of this application is in the event of large amounts of excess renewable energy being available, multiple systems can be commanded on (based on their reported available capacity) to use the excess energy and stabilise the grid.

The processing element will collect data on the heat loss properties of the tank. This information can be used to give the tank and system an energy efficiency rating and identify which systems are under performing and suitable for upgrade to more modern, energy efficient alternatives.

The processing element will be identifying hot water draw from the system and will incorporate a learning element to predict repeat cycles of usage. The system can then proactively manage the system to deliver these patterns of usage, as well as incorporating an efficient contingency amount of water to be permanently available for the user.

The system will collect considerable data on hot water usage which can also be collated for social studies on hot water usage, energy usage, behaviours etc.

Detailed Description of the Drawings and Operation of the Invention

In Figure 1 a hot water tank 110 is shown with a hot water outlet pipe 180 attached to the said tank by a coupling elbow 160. The pipe has a section of insulation 170 and one embodiment of the temperature sensor enclosure 140 fitted next to the said elbow 160. There is also an Immersion heating element 150 on top.

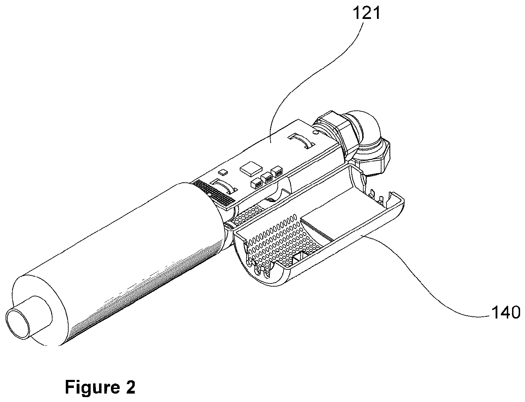

Figure 2 shows the same sensor enclosure 140 in the open position, allowing one embodiment of the temperature sensor mounting platform 121 to be seen.

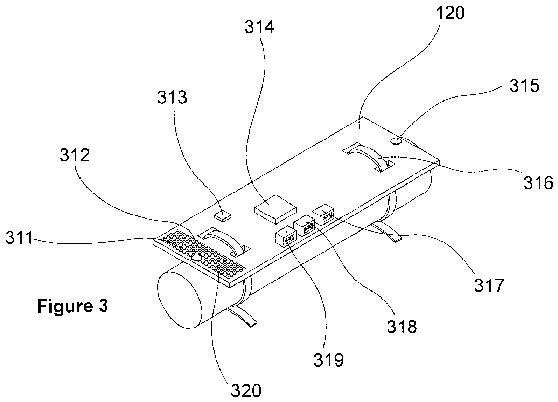

Figure 3 illustrates a temperature sensor mounting platform 120 including the first temperature sensor 315, the second temperature sensor 312, the outlet pipe heat sink 311 and the ambient temperature sensor 313 for additional accuracy are also shown. The ambient temperature sensor is arranged to provide the processing arrangement with data on the ambient temperature that is acting upon the inlet pipe. This allows the system to dynamically compensate for the effect this has on the outlet sensors rate of change and the offsets required in normal operation. Processing means 314, auxiliary terminal (1)316, auxiliary terminal (2)318, and auxiliary terminal (3)319 are also illustrated together with the TEC heat sink 320 and the mounting clamp 316.

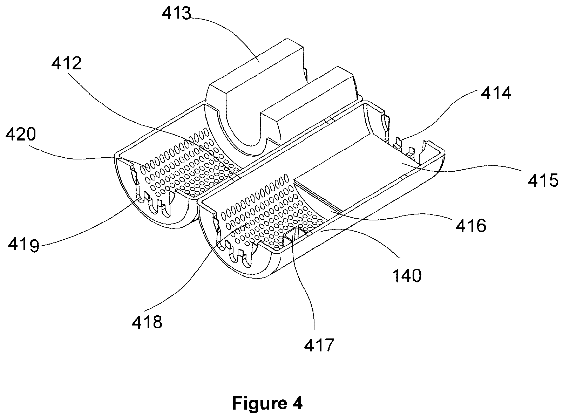

Figure 4 shows the features of enclosure 140 starting with the hinge mechanism 412 first temperature sensor insulation bottom 413, the first temperature sensor insulation top 415, second sensor ventilation perforations top and bottom 418/420, the variable diameter adjustment tabs 414, the ambient temperature sensor duct 417 and cable entry cut-outs 419.

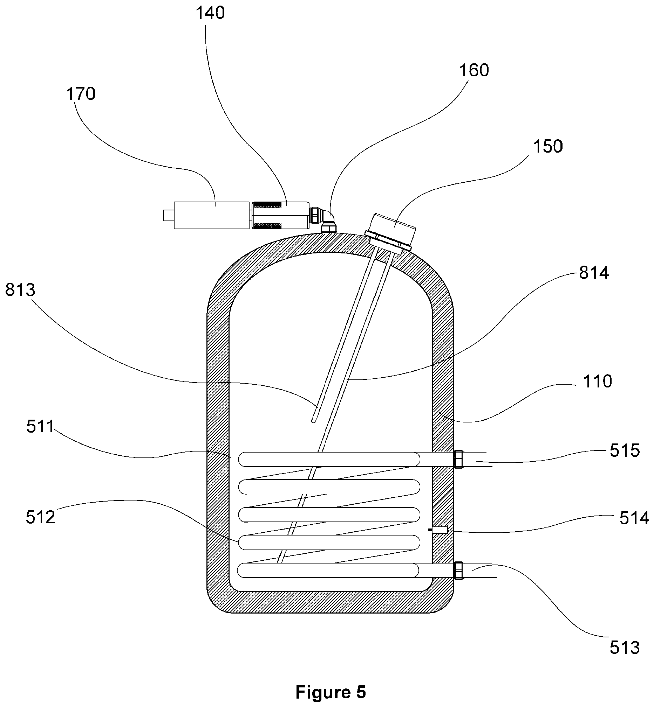

Figure 5 shows a sectional view of a typical hot tank 110 with a heating exchange coil 512, inlet 515, outlet 513, tank insulation 511 and hot water thermostat pickup point 514. If the thermostat pickup point 514 is available, it can be applied to auxiliary terminal 318 when control over heating exchange coil 512 is required.

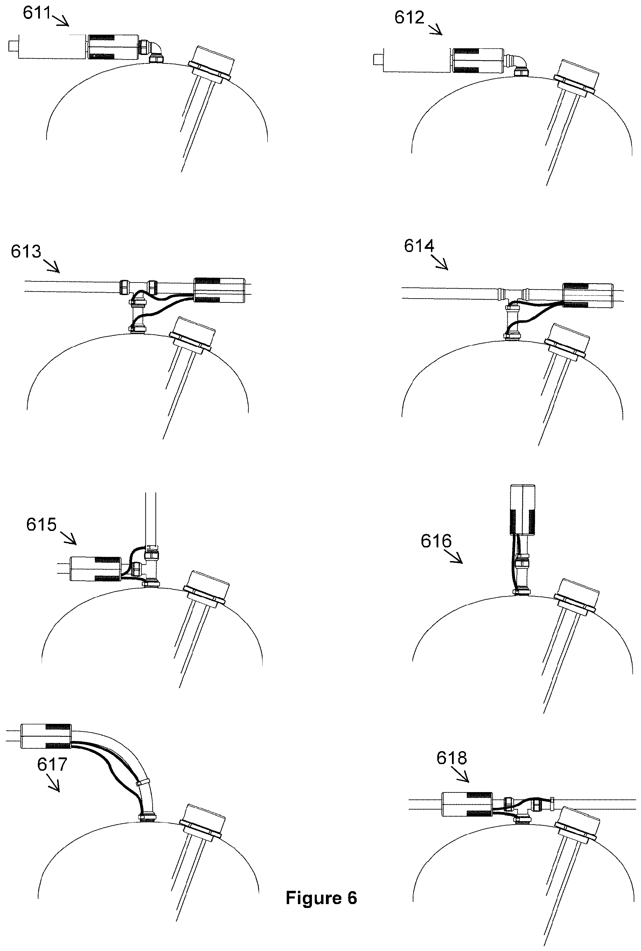

Figure 6 shows a number of different mounting options for different fitting layouts 611-618 including the use of auxiliary temperature sensors where they are required.

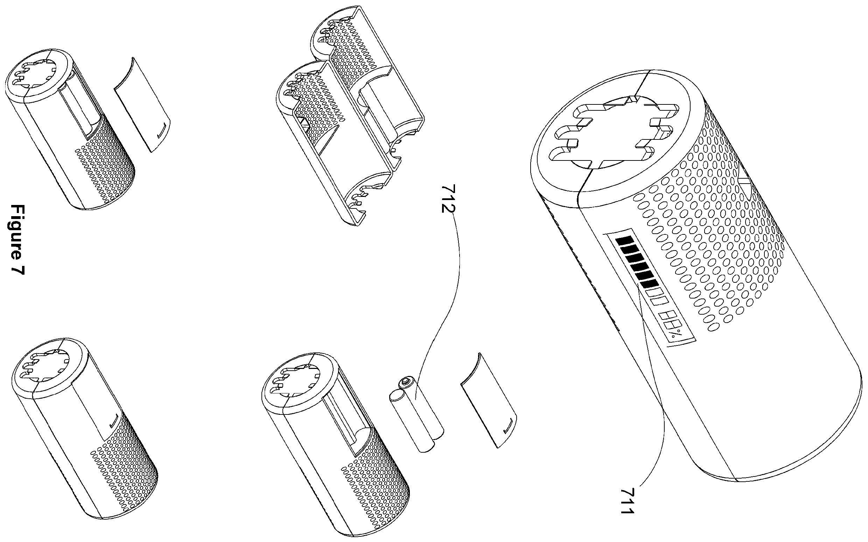

Figure 7 shows two embodiments of the invention one showing an embodiment with a display interface panel 711 and another embodiment showing a battery powered version 712 which can communicate using RF radio.

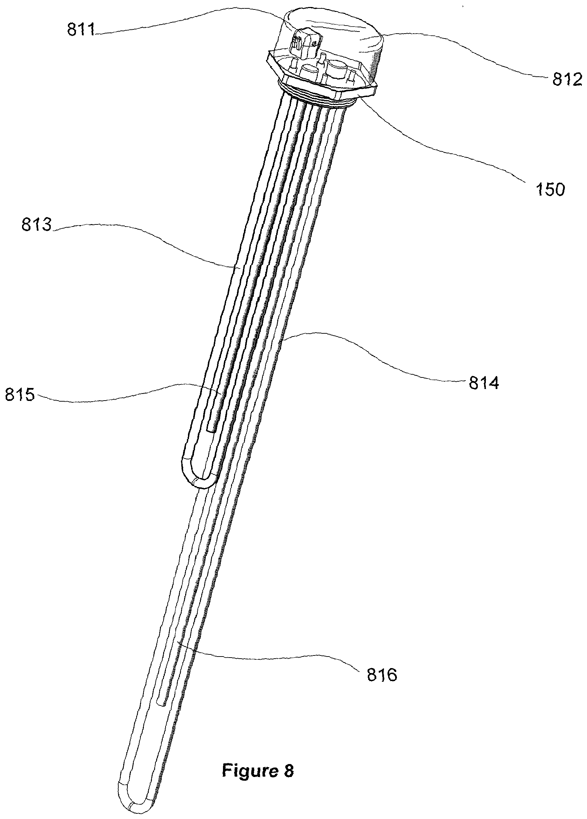

Figure 8 shows an example of a typical immersion element including sink element 813 sink thermostat 815 and bath element 814 bath thermostat 816. It also shows a current clamp 811 and immersion cover 812.

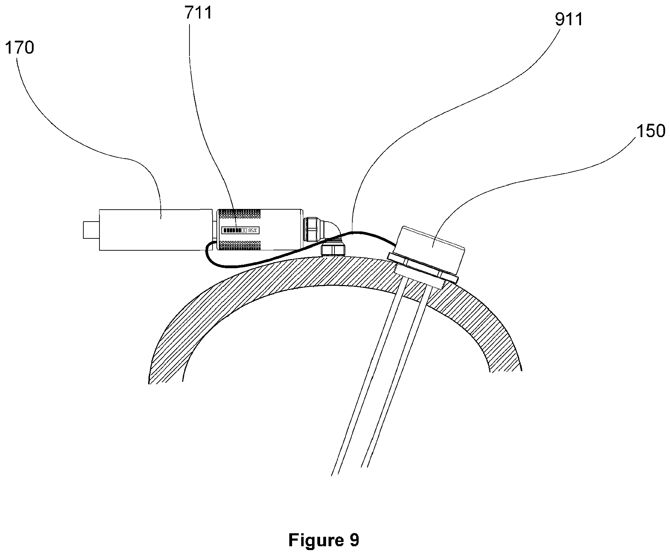

Figure 9 shows the connection 911 between a current clamp inside the immersion and an embodiment of the invention that includes a display interface panel 711.

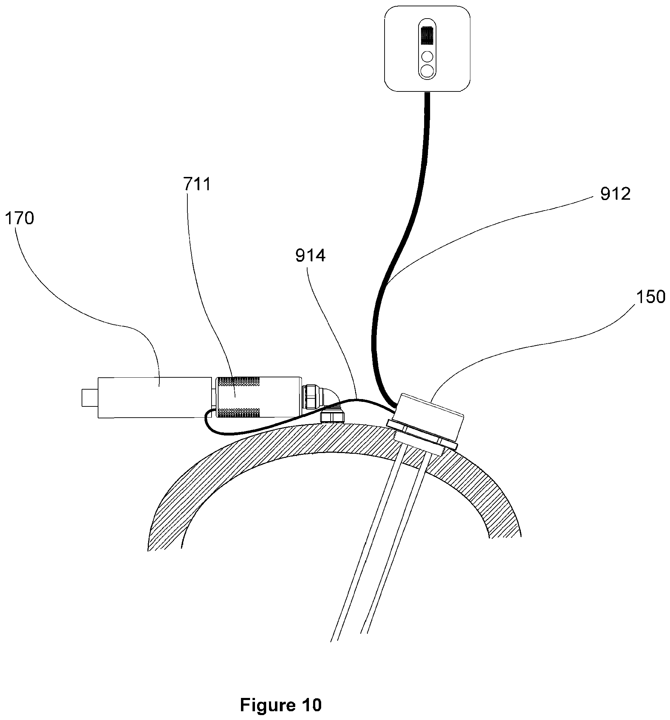

Figure 10 illustrates one embodiment of the invention which depicts the communication cable 914 between the invention and a control apparatus cable 912 using power line communication technology.

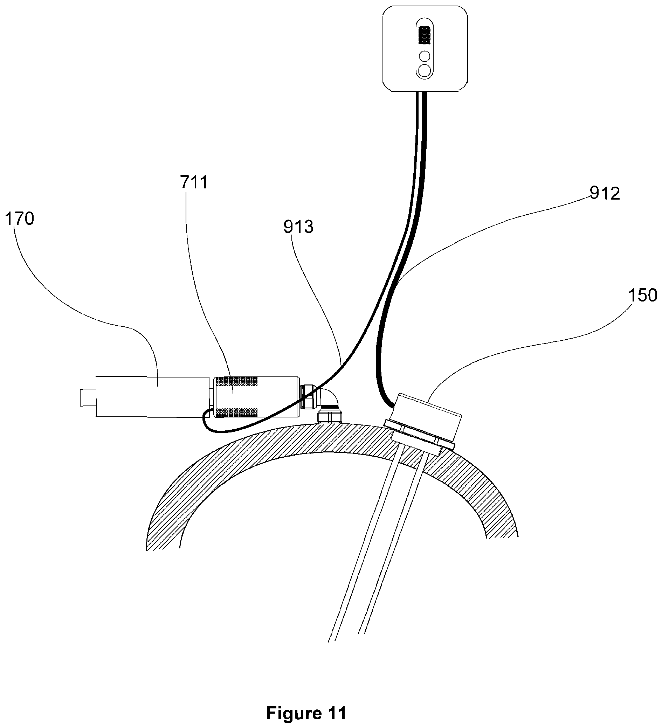

Figure 11 illustrates one embodiment of the invention which shows a communication cable 913 feeding directly to a remote controlled apparatus.

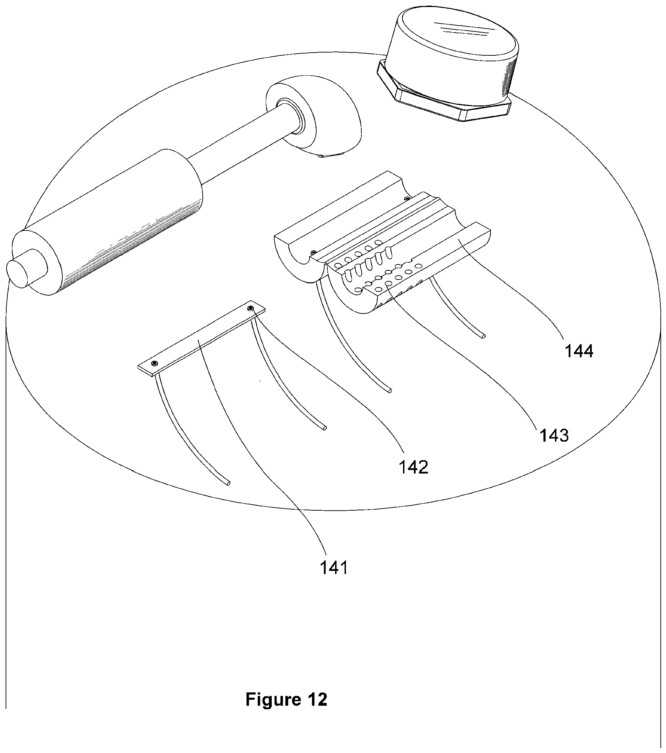

Figure 12 illustrates two additional embodiments of a temperature sensor mounting apparatus 144, including one sensor platform 141 that mounts directly in to the pipe lagging.

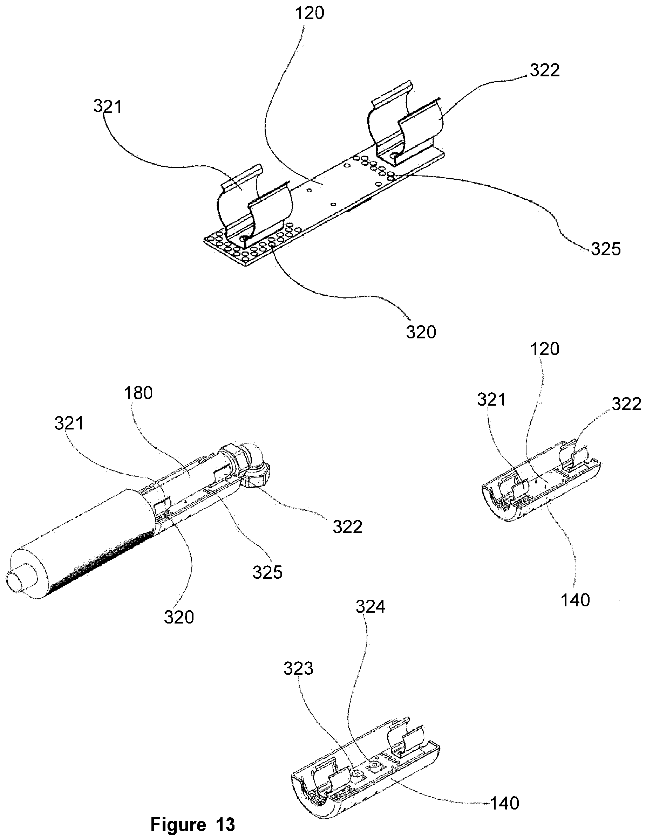

Figure 13 illustrates a temperature sensor mounting platform 120 including first pipe attachment clip 321 and second pipe attachment clip 322, where each clip is arranged to act directly upon a temperature sensing element, heat sink 320 and thermal barrier 325. The hot water outlet pipe 180 attached to said clips is also shown. One embodiment of a sonic flow meter is shown via probes 323 and 324.

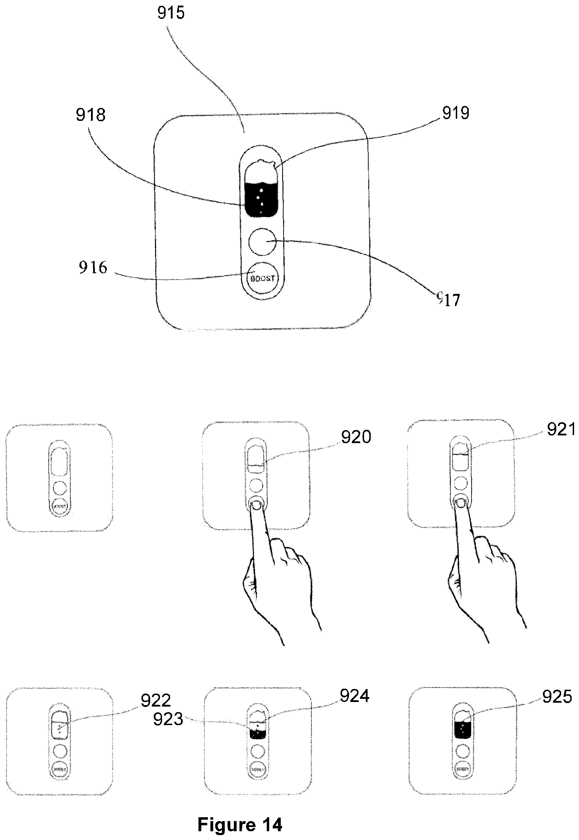

In Figure 14, a wall mounted hub 915 is shown including visual representation of a hot water tank 919 including hot water level 918, a boost button 916 for boosting and interacting with said hub and an electric isolator button 917. Useful hot water target level is shown in two states 30% 920 and 60% 921. One embodiment indicating water being heated is shown in the form of bubbles rising 922, a rolling wave 924 indicating target volume of useful water above actual volume of useful hot water level is also shown 925.

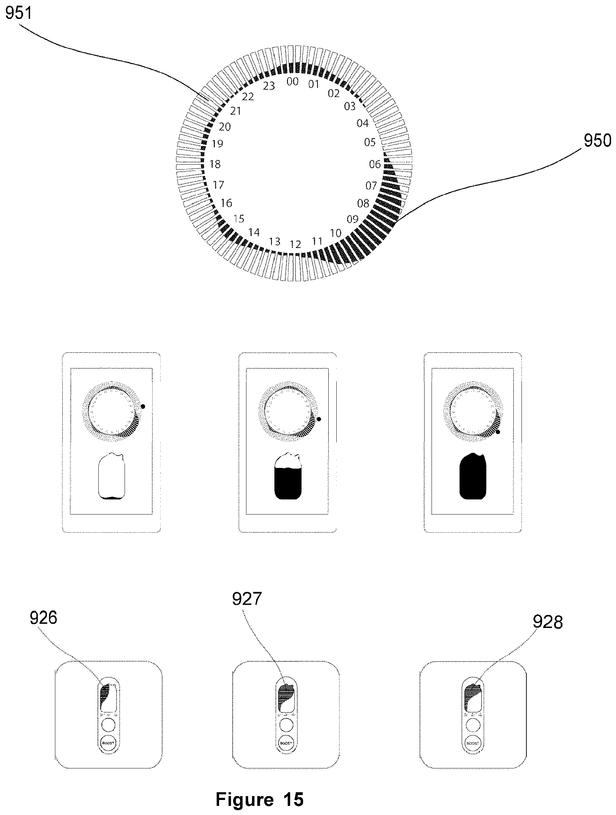

In Figure 15 a dial is used to display the level of water available at any given time during a 24 hour period. An almost empty tank is indicated at 951 and a full tank is indicated at 950 using segments in said dial. One embodiment showing hot water level/temperature within the tank in varying states 926, 927 and 928 is included.

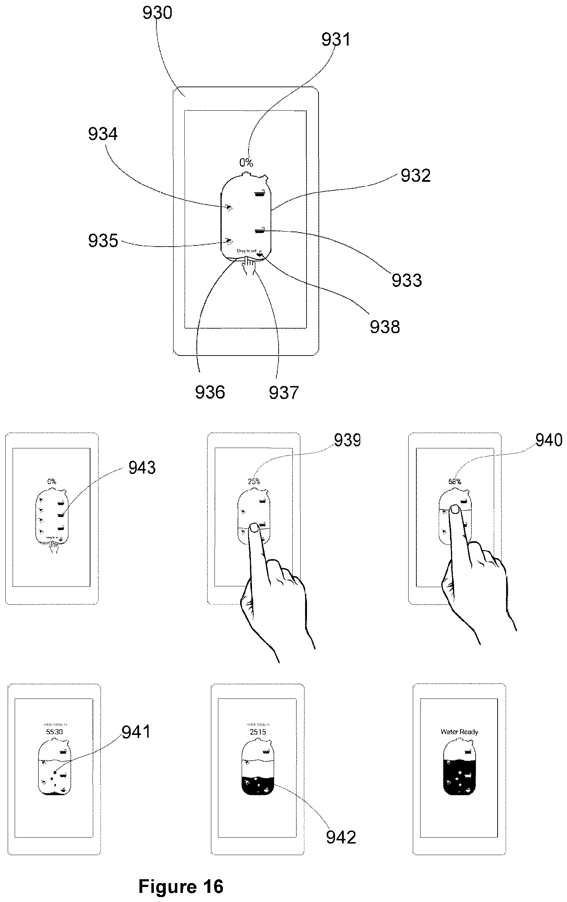

Figure 16 shows a mobile device 930 including a visual representation of a hot water tank 932 with the quantity of hot water as a percentage of total tank capacity shown 931. Icons depicting bath 933, sink 938 and showers 934 and 935 are also included. A means to request hot water 936 and hints as to how to do so 937 are also included. 943 indicates the dynamic ability said icons to reflect various user profiles. 939 shows a user requesting a 25% full tank of hot water. 940 shows a user requesting a 68% full tank of hot water. 941 shows a countdown timer displaying time until hot water is ready. 942 shows target hot water level above actual hot water level mid way through a heating event.

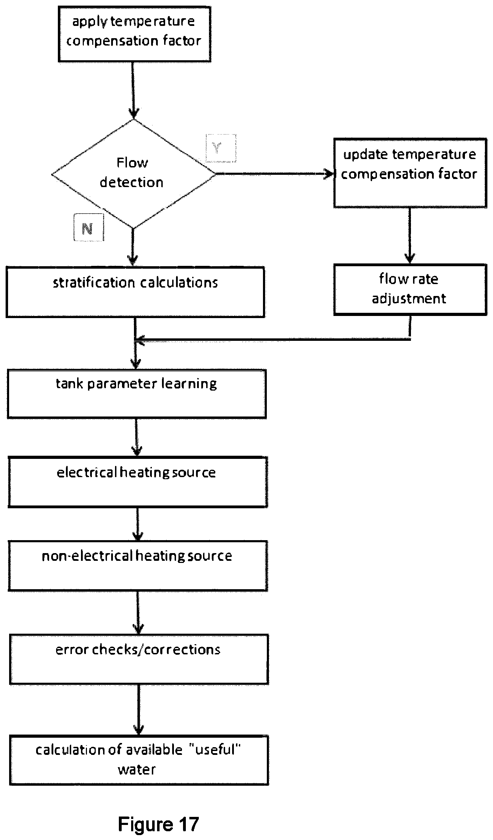

Figure 17 shows the main flow charts.

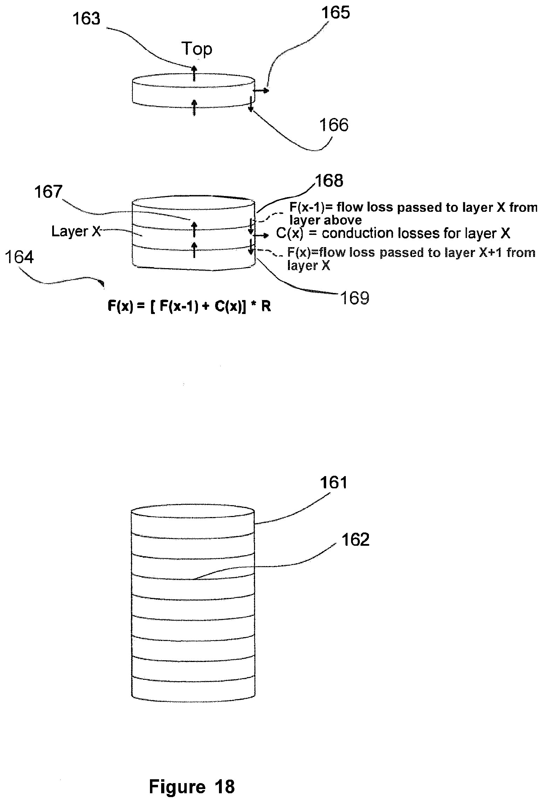

Figure 18 shows a model of a tank 161 with discrete slices along the length of the tank 162 so that each section resembles a disc with a given volume of water The stratification ratio formula 164 is shown

$$F(x) = [\, F(x\text{-}1) + C(x) \,] * R$$

where R = stratification ratio,
The stratification ratio is the proportion of the total losses for a layer that is passed to the layer below.

The ratio is linearly dependent on the temperature gradient that already exists between layer X and X+1, being unity when no gradient exists and reducing to zero when the gradient is 25oC/m (determined empirically)

The present invention provides one or more software modules which are operable to model the tank as discrete slices along the length of the tank so that each section resembles a disc with a given volume of water. It is assumed that all the water in each sub section has a uniform temperature. Data has been collected from different tank types in the field by monitoring temperatures along their length to get an understanding of how temperature distributes under different heating methods i.e. electrical heating elements versus solar or boiler.

Because it is not practical to directly measure the hottest part of the tank, the system depends on a temperature reading being taken along the outlet pipe, as near as possible to the top of the tank. A compensation method is employed to adjust this temperature reading to closer match the temperature at the top of the tank.

When the system is at rest, there will be a temperature delta between both temperature sensors on the outlet pipe, with the sensor furthest from the tank being cooler than the other. When flow occurs, water from the hottest part of the tank will pass by both sensors and both temperature readings will converge. This is one mechanism which is used to identify when flow occurs. Similarly when flow stops, the temperature readings will diverge, with the sensor furthest from the tank cooling quicker than the other, which provides a mechanism to detect when flow has ceased. In addition, when flow occurs, the temperature recorded by the sensors will be that of the water drawn from the top of the tank. This provides an opportunity to determine a compensation factor by tracking the temperature rise detected by the first sensor on the outlet pipe. This correction factor can then be employed to correct future values recorded by the sensor to more accurately represent the temperature at the top of the tank.

Finally, when flow is detected, the stratification model previously determined, is used to track flow through the tank and thereby determine the revised stratification in the tank as a result of the water draw event. Matching the temperature recorded on the outlet pipe with previously calculated stratification levels in the tank will allow the volume of the draw i.e. flow rate, to be determined.

When the tank is in a state of equilibrium i.e. no heating source and no flow, heat is lost from the system through conduction losses. These losses will occur through the top of the tank and sides of the tank. Water cooled at the side of the tank will flow down the outside of the tank, with hotter water from lower layers, moving up the centre of the tank, leading to stratification naturally occurring in the tank, with less efficient tanks giving a faster rate of stratification due to the increased losses. This results in each layer losing energy via conduction losses through the side of the tank as well as convection losses due to the currents generated in the tank. Some energy is also replaced due to eddy current from the layer underneath. The amount of energy loss passed to the layer beneath is proportional to the total loss for the layer and has an inverse linear relationship with the temperature gradient to the layer below i.e. the lower the temperature gradient, the greater the eddy current generated and therefore the greater energy loss passed to the layer beneath. The energy loss passed from layer to layer can be determined by monitoring the losses from the tank, and the stratification naturally occurring in the tank determined.

The rate of temperature drop at the top of the tank, allows a figure of merit for energy performance of the tank to be determined. This is determined by monitoring the tanks energy retention performance over an extended period. This performance factor can then be used when the tank is in a dynamic state e.g. heating source applied, to determine stratification levels that will be evolving during the dynamic state. This is necessary due to the fact that the energy losses from the system cannot be directly measured due to energy being added to the system at the same time. During such a condition, the property previously learned by the system, can be employed in order to maintain the stratification model for the system.

Once the stratification model has been applied, the energy from relevant heating sources can be applied to the system when applicable. For electrical sources, in one embodiment, the energy applied is measured by a separate sensor. The temperature rise at the top of the system is then used to determine how many layers are impacted such that the energy supplied by the source is fully distributed throughout the system.

For non-electrical sources, the total energy added is not known. For such sources, the system can receive an input specifying the number of layers heated by such a source and the temperature rise detected at the top of the system used to determine energy distribution within the system. Another option is for the system to learn this property after a system discharge is implemented subsequent to a heating cycle in order to determine volume of water heated by the non-electrical source.

In the event of an additional temperature sensor fitted to the tank, an error correction method can be employed to cross reference the stratification model to the extra sensor to further improve accuracy.

The energy storage, above 0°C, of each sub layer is the primary variable used in the method. The specific heat capacity of the water, and volume of each layer, is then used to calculate the average temperature of each layer, and finally the total volume of useful water available to the end user.

The method is iterative in that it bases its calculation on temperature profile on the previous temperature profile i.e. historical information is required and then impact of energy in and energy out is calculated. The profile cannot be determined by simply taking a temperature measurement.

There are occasions in the normal heat and cooling operation cycle of a hot water storage device when the stratification model has to work with limited resolution from a lightly stratified tank. In one embodiment of the invention a dynamic bias method is run to improve this position by combining two or more methods of tracking the energy in the tank. Over time the processing means will establish an average energy reduction flow rate per second for each specific tank, this data when used in conjunction with the stratification models energy level data as a starting point can be formulated to give a second figure of the energy stored in the tank, this figure reduces as and when a draw is detected based on the energy reduction flow rate per second value. If this figure is combined with the figure from the stratification model with the biasing method that dynamically adjusts the bias based on the performance of the processing method in the sections of the operation cycle where empirical data, with or without statistical methods, such as regression analysis, are used to calibrate the biasing proportions of one process of measurement against the other, a more accurate result of the energy can be obtained than if only one method was used.

The method is also based on calculating energy storage in each sub section. Once the energy storage of each section is known, this can be converted to an average temperature for that section based on the previously defined volume of the sub section. Each sub section can deliver a greater volume of useful water than the volume of the actual sub section by heating the water in that section higher than the temperature chosen as the useful water threshold i.e. if useful water threshold is set to 40 degrees, then 10 litres of water at 60 degrees can deliver 20 litres of useful water by mixing the 60 degree water with 10 litres of 20 degree water (giving 20 litres at an average temperature of 40 degrees).

This principle is used to calculate the yield of useful water from each sub section thereby reporting total volume of useful water available from the system. The model in the method calculates the impact each energy source will have on the profile of the water in the tank.

The method described above involves distributing energy from different sources within the system. The same method can be used to hypothetically calculate the impact of different sources being applied to the system. Therefore if the user requests more water, the method can run a hypothetical scenario of each heating source on in turn to calculate the required energy input and the required time to deliver the required amount of water.

The system can therefore calculate the optimum way to deliver the required volume of water to the user - optimum may mean with the least amount of energy or the quickest time or the lowest cost (may not be the same). The system can also control the required heating element, for the required length of time, at the required rate, to deliver the required water and notify the user when ready.

Accordingly, the present invention provides an apparatus and methods for managing hot water in a hot water storage tank heating system.

The invention provides means for tracking the temperature profile of hot water in hot water tanks, to allow reporting to the user regarding how much hot water they have available to use.

The invention provides one or more software modules which are operable to calculate how the temperature profile varies as a tank is heated from different sources e.g. when the tank is heated with the sink immersion it will change the profile compared to when it is heated from the boiler.

The invention provides one or more software modules which are operable to convert the temperature profile into a "useful litres" amount or the user i.e. user will get a simple display informing them of the volume of hot water available to them.

The invention provides a control means for turning on and off the different sources for heating the tank. These controls will also have a remote access capability so that the energy sources can be turned on remotely.

One or more software modules are operable to determine how different heat sources impact on the tank so that the method can deliver functionality to the user, when they request a certain amount of water. The system can then calculate the optimum way to deliver that water and control the respective heating source to deliver that the required hot water.

The invention provides water tanks having remote control capability as well as being able to report on current energy storage in the tank. The tank can be used as part of a larger population for grid stabilisation purposes or demand side management (DSM) e.g. when excess wind is available, all tanks can be commanded to turn on in order to use the excess energy or when the grid is approaching its capacity limit, tanks can be turned off for periods to reduce load on the grid. The remote control capability also gives the transmission system operation (TSO) and the distribution system operation (DSO) the ability to adjusting the preset rules on how to react when a voltage or frequencies, disturbance event occurs on the energy grid, typically by adjusting its load on the system

As well as one or more software modules which are operable to track heat sources into the tank, it is critical to track water flow from the tank in order to update the temperature profile in the tank when water is drawn off.

The present invention provides a unique way of doing this through monitoring how the temperature of the outlet pipe varies. This gives a simple non-intrusive way of determining a parameter for one or more software modules to operate.

Aspects of the present invention have been described by way of example only and it should be appreciated that alterations and/or modifications may be made thereto without departing from the scope thereof as defined in the appended claims.

**Claims**

1.  Apparatus for managing hot water in a hot water storage tank heating system having an energy source and a hot water tank (110) with an inlet pipe and an outlet pipe (180), the apparatus comprising:

    a mounting bracket (140) for attaching to the outlet pipe of the hot water tank, the bracket being arranged to hold one or more temperature sensors (312, 315), the sensors being arranged to provide temperature sensor signals from the hot tank outlet,
a computer implemented processing arrangement configured to receive the temperature sensor signals, wherein the processing arrangement is arranged to run one or more processing means to establish the temperature distribution within the tank and
an interface configured to communicate with a user or additional processors either locally or remotely,

**characterised in that** a second temperature sensor (312) is spaced from a first sensor (315) along the outlet pipe and cooling features (311) are provided around the second sensor thereby promoting a larger temperature delta across the mounting bracket, thereby increasing accuracy.

2. Apparatus as claimed in Claim 1, in which a program incorporated in the processing arrangement is adapted to model the hot water tank as discrete uniform sub elements (162) along its vertical axis, the properties of the water in the aforementioned sub elements being assumed to be uniform across each sub element, with empirical stratification models being developed for different tank geometries and energy sources, and in which energy input levels are directly measurable using a current measuring means with the processing arrangement configured to receive signals from the current measuring means, or alternatively energy input levels of each heating source are inputtable as fundamental properties of the heating system for incorporation into the program.

3. Apparatus as claimed in Claim 2, in which as hot water is drawn from the highest sub element of the system and cold water is drawn into the system at the lowest sub element, internal energy transfer within the system being in a vertical direction from sub element to sub element, the processing arrangement is adapted to incorporate energy drawn from the system and the impact that it has on the energy stratification within the system into the stratification model.

4. Apparatus as claimed in any one of Claims 1 to 3, wherein the second temperature sensor (312) is spaced from the first sensor (315) either within the mounting bracket (140) or on a flying lead, preferably in which accuracy is improved by insulating the first sensor and the associated outlet pipe (180) and fittings between the first sensor and the tank (110), thereby promoting a larger temperature delta between the first and second outlet sensor, thereby increasing accuracy, particularly preferably in which the processing arrangement is adapted to use the temperature delta to identify when water is being drawn from the system, wherein when water stops flowing the outlet pipe will again cool allowing the processing arrangement to detect when water flow has ceased, wherein accuracy is improved by incorporating the second temperature sensor so that temperature deltas are increased and the rate at which the temperatures converge is also used to determine the flow rate through the pipe.

5. Apparatus as claimed in any one of the preceding claims, wherein the apparatus further comprises an ambient temperature sensor (313) arranged to provide the processing arrangement with data on the ambient temperature that is acting on the tank (110) and on the inlet pipe.

6. Apparatus as claimed in any one of Claims 2 and 3 to 5 when dependent on claim 2, in which the stratification model is in accordance with the following:

$$\text{Element}(x)\_t(0) = \text{element}(x)\_t(-1)*\text{Loss\_rate} + [\text{element}(x+1)\_t(-1) - \text{element}(x)\_t(-1)]*\text{flow}$$

where

Element(x)_t(0) is the current energy storage above 0°c for any sub element of the tank
Element(x)_t(-1) is the energy storage above ambient for the current sub element calculated in the previous predefined period
Element(x+1)_t(-1) is the energy storage in the sub element below element x in the previous predefined period
Flow = flow rate from system
Loss_rate = inefficiency rating of tank

7. Apparatus as claimed in any one of the preceding claims, in which an iterative method incorporated in the processing arrangement maintains a real time representation of energy storage of each sub element of the hot tank system, wherein when the desired water temperature is known, the available hot water can be determined by calculating volume of ambient water to be added to each sub element in order to deliver water at the required temperature,

thereby calculating the total potential capacity of useful hot water using the formula:

$$L = \sum_{sec=1} \mathrm{if}(\mathrm{T(sec)} > Tu, Ls * (T(\mathrm{sec}) - \mathrm{Tu})/(\mathrm{Tu} - \mathrm{Ta}))$$

where

L = total useful litres available
Sec = section number
T(sec) = temperature of sub section
Tu = predefined temperature of required water
Ls = capacity of each sub section
Ta = temperature of cold water feed

thereby allowing the available capacity of hot water to be reported to the user or any relevant third party in real time.

8. Apparatus as claimed in any one of Claims 2 to 7, in which the empirical stratification models are used to recursively predict future stratification profiles within the tank when different energy sources are enabled, the processing arrangement incorporating an input mechanism from the user to request a fixed amount of hot water, the processing arrangement being adapted to recursively predict the stratification in the tank based on each heating source to deliver the said volume of water and making a decision on which heating source to engage and what rate to deliver said volume of water based on either minimising energy usage, speed of delivery or cost of delivery, depending on which is considered a higher priority or not appropriate.

9. Apparatus as claimed in any one of the preceding claims, in which the processing arrangement is adapted to control the energy source as required, and monitors system performance to provide closed feedback control and notify the user when the required volume of water is available.

10. Apparatus as claimed in any one of the preceding claims, in which energy data is calculated as actual useful litres of hot water and displayed to the user through a user interface which shows the useful litres as a percentage of the total tank capacity, this information being displayed to the user in the form of varying levels of water representing useful hot water on a display or inside a visual representation of a typical hot water tank, optionally this information being displayed as horizontal bar graphs representing discrete slices directly correlating to temperature inside a visual representation of a typical hot water tank with a temperature scale, or optionally, this information being displayed using bar graphs with varying temperatures represented by different coloured bars; wherein such presentations are simplified and improved methods of presenting information to the user when compared to a basic hot water temperature reading.

11. Apparatus as claimed in any one of the preceding claims, in which the processing arrangement comprises a remote communications element which includes but is not limited to power line communications and allows the system to receive requests/commands locally or remotely with regard to excess or too little power or other reasons relating to energy price signal, DSM signal, and adjusting preset rules on how to reacting to voltage or frequencies, disturbances or events thereby allowing the system to act as an element in a macro system where multiple systems can be controlled together or in groups for grid management purposes, such as but not limited to an event of large amounts of excess renewable energy being available, multiple systems can be commanded to use the excess energy and stabilise the grid.

12. Apparatus as claimed in any one of the preceding claims, in which the processing arrangement is adapted to collect data on heat loss properties of the tank, this information being used to give the tank and system an energy efficiency rating, preferably in which the processing arrangement collects data on heating systems that underperform, display unusual operations or indicate fault detection and presents the data locally and remotely.

13. Apparatus as claimed in any one of the preceding claims, in which the processing arrangement is adapted to identify hot water draw from the system and incorporates a learning element to predict repeat cycles of usage, wherein the apparatus is adapted to proactively manage the system with regard to the cost of the energy required and the time of use to deliver these patterns of usage, as well as with regard to an efficient contingency amount of water to be permanently available for the user.

14. Apparatus as claimed in any one of the preceding claims, in which the results of two or more methods of monitoring a hot tank include but are not limited to (A) an average flow per second method of monitoring a hot tank or (B) a multiple temperature probe down the tank method or (C) a computer-simulated stratified tank method, that have different characteristics in different sections of the operation cycle combined with a biasing method based on the performance of a monitoring method in the sections of the operation cycle where empirical data, with or without statistical methods, such as regression analysis, are incorporated into the processing arrangement and used to calibrate the biasing proportions of one method of measurement against the other or others to give a more accurate result than if only one method was used.

15. A method for establishing a temperature distribution within a hot water tank, the method using an apparatus for managing hot water in a hot water storage heating system having an energy source and a hot water tank as claimed in any one of the preceding claims.

**Patentansprüche**

1. Vorrichtung zum Verwalten von Warmwasser in einem Warmwasserspeichertank-Heizsystem mit einer Energiequelle und einem Warmwassertank (110) mit einem Einlassrohr und einem Auslassrohr (180), wobei die Vorrichtung umfasst:

   eine Montagehalterung (140) zum Anbringen an dem Auslassrohr des Warmwassertanks, wobei die Halterung angeordnet ist, um einen oder mehrere Temperatursensoren (312, 315) zu halten, wobei die Sensoren angeordnet sind, um Temperatursensorsignale vom Warmtankauslass bereitzustellen,
   eine computerimplementierte Verarbeitungsanordnung, die konfiguriert ist, um die Temperatursensorsignale zu empfangen, wobei die Verarbeitungsanordnung angeordnet ist, um ein oder mehrere Verarbeitungsmittel auszuführen, um die Temperaturverteilung innerhalb des Tanks herzustellen, und eine Schnittstelle, die konfiguriert ist, um mit einem Benutzer oder zusätzlichen Prozessoren entweder lokal oder aus der Ferne zu kommunizieren,
   **dadurch gekennzeichnet, dass** ein zweiter Temperatursensor (312) von einem ersten Sensor (315) entlang des Auslassrohrs beabstandet ist und Kühlmerkmale (311) um den zweiten Sensor herum bereitgestellt sind, wodurch ein größeres Temperaturdelta über die Montagehalterung gefördert wird, wodurch die Genauigkeit erhöht wird.

2. Vorrichtung nach Anspruch 1, bei der ein in die Verarbeitungsanordnung integriertes Programm angepasst ist, um den Warmwassertank als diskrete gleichförmige Unterelemente (162) entlang seiner vertikalen Achse zu modellieren, wobei angenommen wird, dass die Eigenschaften des Wassers in den vorgenannten Unterelementen über jedes Unterelement einheitlich sind, wobei empirische Schichtungsmodelle für unterschiedliche Tankgeometrien und Energiequellen entwickelt werden und bei denen Energieeintragsniveaus unter Verwendung einer Strommesseinrichtung direkt messbar sind, wobei die Verarbeitungsanordnung konfiguriert ist, um Signale von der Strommesseinrichtung zu empfangen, oder alternativ die Energieeintragniveaus jeder Heizquelle als grundlegende Eigenschaften des Heizsystems zur Einbindung in das Programm eingebbar sind.

3. Vorrichtung nach Anspruch 2, bei der Warmwasser vom höchsten Unterelement des Systems entnommen wird und Kaltwasser am untersten Unterelement in das System hineingezogen wird, wobei die interne Energieübertragung innerhalb des Systems in vertikaler Richtung von Unterelement zu Unterelement erfolgt, wobei die Verarbeitungsanordnung angepasst ist, um Energie, die aus dem
System entnommen wird, und die Auswirkungen, die sie auf die Energieschichtung innerhalb des Systems hat, in das Schichtungsmodell aufzunehmen.

4. Vorrichtung nach einem der Ansprüche 1 bis 3, wobei der zweite Temperatursensor (312) vom ersten Sensor (315) entweder innerhalb der Montagehalterung (140) oder an einer freien Leitung beabstandet ist, wobei vorzugsweise die Genauigkeit durch Isolieren des ersten Sensors und des zugehörigen Auslassrohrs (180) und der Armaturen zwischen dem ersten Sensor und dem Tank (110) verbessert ist, wodurch ein größeres Temperaturdelta zwischen dem ersten und zweiten Auslasssensor gefördert wird, wodurch die Genauigkeit erhöht wird, besonders bevorzugt, bei der die Verarbeitungsanordnung angepasst ist, um das Temperaturdelta zu verwenden, um zu erkennen, wann Wasser aus dem System entnommen wird, wobei, wenn das Wasser aufhört zu fließen, das Auslassrohr wieder abkühlt, was es der Verarbeitungsanordnung ermöglicht, zu erkennen, wann der Wasserfluss aufgehört hat, wobei die Genauigkeit durch Integrieren der zweiten Temperatursensors verbessert wird, so dass die Temperaturdeltas erhöht werden und die Geschwindigkeit, mit der die Temperaturen konvergieren, auch verwendet wird, um die Durchflussmenge durch das Rohr zu bestimmen.

5. Vorrichtung nach einem der vorhergehenden Ansprüche, wobei die Vorrichtung ferner einen Umgebungstemperatursensor (313) umfasst, der angeordnet ist, um der Verarbeitungsanordnung Daten über die Umgebungstemperatur zu liefern, die auf den Tank (110) und das Einlassrohr einwirkt.

6. Vorrichtung nach einem der Ansprüche 2 und 3 bis 5, wenn in Abhängigkeit von Anspruch 2, bei der das Schichtungsmodell dem Folgenden entspricht:

$$\text{Element(x)\_t(0)} = \text{Element(x)\_t(-1)*Verlustrate} + [\text{Element(x+1)\_t(-1)} - \text{Element(x)\_t(-1)}]*\text{Durchfluss}$$

wobei

Element(x)_t(0) die aktuelle Energiespeicherung über 0°c für jedes Unterelement des Tanks ist
Element(x)_t(-1) die Energiespeicherung über der Umgebungstemperatur für das aktuelle Unterelement ist, das in der vorherigen vordefinierten Periode berechnet wurde
Element(x+1)_t(-1) die Energiespeicherung im Unterelement unter Element x in der vorherigen vordefinierten Periode ist
Durchfluss = Durchflussmenge vom System
Verlust_rate = Ineffizienzbewertung des Tanks

7. Vorrichtung nach einem der vorhergehenden Ansprüche, bei der ein iteratives Verfahren, das in der Verarbeitungsanordnung enthalten ist, eine Echtzeitdarstellung der Energiespeicherung jedes Unterelements des Warmtanksystems aufrechterhält, wobei, wenn die gewünschte Wassertemperatur bekannt ist, das verfügbare Warmwasser bestimmt werden kann, indem das Volumen des Umgebungswassers berechnet wird, das jedem Unterelement hinzugefügt werden soll, um Wasser mit der erforderlichen Temperatur zu liefern, wodurch die potenzielle Gesamtkapazität an nutzbarem Warmwasser mit der Formel berechnet wird:

$$L = \sum_{sec=1} \mathrm{w}(\mathrm{T(sec)} > Tu, Ls * (T(\mathrm{sec}) - \mathrm{Tu})/(\mathrm{Tu} - \mathrm{Ta}))$$

wobei L = verfügbare nutzbare Liter insgesamt
Sec = Abschnittsnummer
T(sec) = Temperatur des Unterabschnitts
Tu = vordefinierte Temperatur des benötigten Wassers
Ls = Kapazität jedes Unterabschnitts
Ta = Temperatur des Kaltwasserzulaufs
wodurch ermöglicht wird, dass die verfügbare Warmwasserkapazität in Echtzeit an den Benutzer oder einen relevanten Dritten gemeldet wird.

8. Vorrichtung nach einem der Ansprüche 2 bis 7, bei der die empirischen Schichtungsmodelle verwendet werden, um zukünftige Schichtungsprofile innerhalb des Tanks rekursiv vorherzusagen, wenn verschiedene Energiequellen aktiviert werden, wobei die Verarbeitungsanordnung einen Eingabemechanismus vom Benutzer enthält, um eine feste Menge an Warmwasser anzufordern, wobei die Verarbeitungsanordnung angepasst ist, um rekursiv die Schichtung im Tank basierend auf jeder Heizquelle vorherzusagen, um das besagte Wasservolumen zu liefern, und eine Entscheidung darüber zu treffen, welche Heizquelle eingeschaltet werden soll und mit welcher Geschwindigkeit das besagte Wasservolumen geliefert werden soll, basierend entweder auf der Minimierung des Energieverbrauchs, der Liefergeschwindigkeit oder den Lieferkosten, je nachdem, was als höhere Priorität oder als nicht angemessen angesehen wird.

9. Vorrichtung nach einem der vorhergehenden Ansprüche, bei der die Verarbeitungsanordnung angepasst ist, um die Energiequelle nach Bedarf zu steuern und die Systemleistung überwacht, um eine geschlossene Rückkopplungssteuerung bereitzustellen und den Benutzer zu benachrichtigen, wenn das erforderliche Wasservolumen verfügbar ist.

10. Vorrichtung nach einem der vorhergehenden Ansprüche, bei der die Energiedaten als tatsächlich nutzbare Liter Warmwasser berechnet und dem Benutzer über eine Benutzerschnittstelle angezeigt werden, die die nutzbaren Liter als Prozentsatz der gesamten Tankkapazität anzeigt, wobei diese Informationen dem Benutzer in Form von unterschiedlichen Wasserständen angezeigt werden, die nützliches Warmwasser auf einer Anzeige oder in einer visuellen Darstellung eines typischen Warmwassertanks darstellen, wobei optional diese Informationen als horizontale Balkendiagramme angezeigt werden, die diskrete Scheiben darstellen, die direkt mit der Temperatur in einer visuellen Darstellung eines typischen Warmwassertanks mit einer Temperaturskala korrelieren, oder optional, wobei diese Informationen unter Verwendung von Balkendiagrammen mit unterschiedlichen Temperaturen angezeigt werden, die durch verschiedenfarbige Balken dargestellt werden; wobei solche Präsentationen vereinfachte und verbesserte Verfahren zum Präsentieren von Informationen für den Benutzer im Vergleich zu einer grundlegenden Warmwassertemperaturmessung sind.

11. Vorrichtung nach einem der vorhergehenden Ansprüche, bei der die Verarbeitungsanordnung ein Fernkommunikationselement umfasst, das Kommunikationen über das Stromversorgungsnetz umfasst, aber nicht darauf beschränkt ist, und es dem System ermöglicht, Anforderungen/Befehle lokal oder entfernt in Bezug auf überschüssigen oder zu wenig Strom oder andere Gründe in Bezug auf das Energiepreissignal, DSM-Signal, und die Anpassung voreingestellter Regeln für die Reaktion auf Spannung oder Frequenzen, Störungen oder Ereignisse zu empfangen, wodurch ermöglicht wird, dass das System als Element in einem Makrosystem funktioniert, in dem mehrere Systeme gemeinsam oder in Gruppen für Netzmanagementzwecke gesteuert werden können, wie beispielsweise, aber nicht beschränkt auf, im Fall, dass große Mengen überschüssiger erneuerbarer Energie verfügbar sind, können mehrere Systeme angewiesen werden, die überschüssige Energie zu nutzen und das Netz zu stabilisieren.

12. Vorrichtung nach einem der vorhergehenden Ansprüche, bei der die Verarbeitungsanordnung angepasst ist, um Daten über die Wärmeverlusteigenschaften des Tanks zu sammeln, wobei diese Informationen verwendet werden, um dem Tank und dem System eine Energieeffizienzbewertung zu geben, vorzugsweise bei der die Verarbeitungsanordnung Daten zu Heizsystemen sammelt, die leistungsschwach sind, ungewöhnliche Vorgänge anzeigen oder eine Fehlererkennung anzeigen, und die Daten lokal und aus der Ferne präsentiert.

13. Vorrichtung nach einem der vorhergehenden Ansprüche, bei der die Verarbeitungsanordnung angepasst ist, um Warmwasserentnahmen aus dem System zu erkennen, und ein Lernelement enthält, um wiederholte Nutzungszyklen vorherzusagen, wobei die Vorrichtung angepasst ist, um das System in Bezug auf die Kosten der benötigten Energie und die Nutzungsdauer, um diese Nutzungsmuster zu liefern, sowie in Bezug auf eine effiziente Notfallmenge an Wasser, die dem Benutzer dauerhaft zur Verfügung steht, proaktiv zu verwalten.

14. Vorrichtung nach einem der vorhergehenden Ansprüche, bei der die Ergebnisse von zwei oder mehr Verfahren zum Überwachen eines Warmtanks umfassen, aber nicht darauf beschränkt sind: (A) ein Verfahren zum Überwachen eines Warmtanks über durchschnittlichen Durchfluss pro Sekunde oder (B) ein Verfahren mit Mehrfachtemperatursonden im Tank nach unten oder (C) ein computersimuliertes Schichtspeicherverfahren, die in verschiedenen Abschnitten des Betriebszyklus unterschiedliche Merkmale aufweisen, kombiniert mit einem Biasing-Verfahren basierend auf der Leistung eines Überwachungsverfahrens in den Abschnitten des Betriebszyklus, bei denen empirische Daten mit oder ohne statistische Methoden, wie Regressionsanalyse, in die Verarbeitungsanordnung integriert werden und verwendet werden, um die Verzerrungsanteile eines Messverfahren gegen die andere oder anderen zu kalibrieren, um ein genaueres Ergebnis zu erhalten, als wenn nur ein Verfahren verwendet würde.

15. Verfahren zum Herstellen einer Temperaturverteilung innerhalb eines Warmwassertanks, wobei das Verfahren eine Vorrichtung zum Verwalten von Warmwasser in einem Warmwasserspeicher-Heizsystem mit einer Energiequelle und einen Warmwassertank nach einem der vorhergehenden Ansprüche verwendet.

## Revendications

1. Appareil destiné à gérer l'eau chaude dans un système de chauffage de réservoir de stockage d'eau chaude possédant une source d'énergie et un réservoir d'eau chaude (110) avec un tuyau d'entrée et un tuyau de sortie (180), l'appareil comprenant :

un support de montage (140) destiné à être fixé au tuyau de sortie du réservoir d'eau chaude, le support étant agencé pour contenir un ou plusieurs capteurs de température (312, 315), les capteurs étant agencés pour fournir des signaux de capteur de température provenant de la sortie du réservoir chaud,

un agencement de traitement mis en œuvre par ordinateur conçu pour recevoir les signaux de capteur de température, ledit agencement de traitement étant agencé pour exécuter un ou plusieurs moyens de traitement afin d'établir la distribution de température à l'intérieur du réservoir et une interface conçue pour communiquer avec un utilisateur ou des processeurs supplémentaires localement ou à distance,

**caractérisé en ce qu'**un second capteur de température (312) est espacé d'un premier capteur (315) le long du tuyau de sortie et des éléments de refroidissement (311) sont disposés autour du second capteur, favorisant ainsi un delta de température plus important à travers le support de montage, augmentant ainsi la précision.

2. Appareil selon la revendication 1, dans lequel un programme incorporé dans l'agencement de traitement est adapté pour modéliser le réservoir d'eau chaude sous forme de sous-éléments uniformes distincts (162) le long de son axe vertical, les propriétés de l'eau dans les sous-éléments susmentionnés étant supposées être uniformes sur chaque sous-élément, des modèles de stratification empiriques étant développés pour différentes géométries de réservoir et sources d'énergie, et dans lequel les niveaux d'entrée d'énergie sont directement mesurables à l'aide d'un moyen de mesure de courant avec l'agencement de traitement conçu pour recevoir des signaux en provenance du moyen de mesure de courant, ou alternativement, les niveaux d'entrée d'énergie de chaque source de chauffage peuvent être entrés en tant que propriétés fondamentales du système de chauffage en vue d'une incorporation dans le programme.

3. Appareil selon la revendication 2, dans lequel, tandis que l'eau chaude est prélevée du sous-élément le plus élevé du système et que l'eau froide est prélevée dans le système au niveau du sous-élément le plus bas, le transfert d'énergie interne à l'intérieur du système étant dans une direction verticale du sous-élément au sous-élément, l'agencement de traitement est adapté pour incorporer l'énergie prélevée du système et l'impact qu'elle a sur la stratification énergétique à l'intérieur du système dans le modèle de stratification.

4. Appareil selon l'une quelconque des revendications 1 à 3, ledit second capteur de température (312) étant espacé du premier capteur (315) soit à l'intérieur du support de montage (140) soit sur un fil volant, de préférence dans lequel la précision est améliorée en isolant le premier capteur et le tuyau de sortie associé (180) et les raccords entre le premier capteur et le réservoir (110), favorisant ainsi un plus grand delta de température entre le premier et le second capteur de sortie, augmentant ainsi la précision, en particulier de préférence dans lequel l'agencement de traitement est adapté pour utiliser le delta de température pour identifier le moment où l'eau est prélevée du système, lorsque l'eau cesse de s'écouler, le tuyau de sortie se refroidit à nouveau, permettant à l'agencement de traitement de détecter le moment où l'écoulement d'eau a cessé, ladite précision étant améliorée en incorporant le second capteur de température afin que les deltas de température soient accrus et ladite vitesse à laquelle les températures convergent soit également utilisée pour déterminer le débit à travers le tuyau.

5. Appareil selon l'une quelconque des revendications précédentes, ledit appareil comprenant en outre un capteur de température ambiante (313) agencé pour fournir à l'agencement de traitement des données sur la température ambiante qui agit sur le réservoir (110) et sur le tuyau d'entrée.

6. Appareil selon l'une quelconque des revendications 2 et 3 à 5 lorsqu'elles dépendent de la revendication 2, dans lequel le modèle de stratification est conforme à ce qui suit :

$$\text{élément(x)\_t(0)} = \text{élément(x)\_t(-1)}*\text{taux\_perte} + [\text{élément(x+1)\_t(-1)} - \text{élément(x)\_t(-1)}]*\text{débit}$$

où

élément(x)_t(0) est le stockage d'énergie actuel au-dessus de 0°c pour tout sous-élément du réservoir
élément(x)_t(-1) est le stockage d'énergie au-dessus de la température ambiante pour le sous-élément actuel calculé dans la période prédéfinie précédente
élément(x+1)_t(-1) est le stockage d'énergie dans le sous-élément sous l'élément x dans la période prédéfinie précédente
débit = débit du système
taux_perte = taux d'inefficacité du réservoir.

7. Appareil selon l'une quelconque des revendications précédentes, dans lequel un procédé itératif incorporé dans l'agencement de traitement maintient une représentation en temps réel du stockage d'énergie de chaque sous-élément du système de réservoir chaud, lorsque la température d'eau souhaitée est connue, ladite eau chaude disponible pouvant être déterminée en calculant le volume d'eau ambiante à ajouter à chaque sous-élément afin de fournir de l'eau à la température requise, calculant ainsi la capacité potentielle totale d'eau chaude utile à l'aide de la formule :

$$L = \sum_{sec=1} \mathrm{si}\,(\mathrm{T(sec)} > Tu, Ls * (T(\mathrm{sec}) - \mathrm{Tu})/(\mathrm{Tu} - \mathrm{Ta}))$$

où L = litres utiles totaux disponibles
Sec = numéro de section
T(sec) = température de la sous-section
Tu = température prédéfinie de l'eau requise
Ls = capacité de chaque sous-section
Ta = température d'alimentation en eau froide
permettant ainsi de signaler en temps réel la capacité d'eau chaude disponible à l'utilisateur ou à tout tiers concerné.

8. Appareil selon l'une quelconque des revendications 2 à 7, dans lequel les modèles de stratification empiriques sont utilisés pour prédire de manière récursive les futurs profils de stratification à l'intérieur du réservoir lorsque différentes sources d'énergie sont activées, l'agencement de traitement incorporant un mécanisme d'entrée provenant de l'utilisateur pour demander un quantité fixe d'eau chaude, l'agencement de traitement étant adapté pour prédire de manière récursive la stratification dans le réservoir sur la base de chaque source de chauffage pour fournir ledit volume d'eau et prendre une décision sur quelle source de chauffage impliquer et la vitesse à laquelle fournir ledit volume d'eau sur la base de la réduction de la consommation d'énergie, la rapidité de livraison ou le coût de livraison, en fonction de ce qui est considéré comme une priorité plus élevée ou non approprié.

9. Appareil selon l'une quelconque des revendications précédentes, dans lequel l'agencement de traitement est adapté pour commander la source d'énergie selon les besoins, et surveille les performances du système pour fournir une commande à rétroaction fermée et avertir l'utilisateur lorsque le volume d'eau requis est disponible.

10. Appareil selon l'une quelconque des revendications précédentes, dans lequel les données d'énergie sont calculées en litres utiles réels d'eau chaude et affichées à l'utilisateur par l'intermédiaire d'une interface utilisateur qui présente les litres utiles en pourcentage de la capacité totale du réservoir, ces informations étant affichées à l'utilisateur sous la forme de niveaux d'eau variables représentant l'eau chaude utile sur un dispositif d'affichage ou à l'intérieur d'une représentation visuelle d'un réservoir d'eau chaude typique, éventuellement ces informations étant affichées sous forme de diagrammes en bâtons horizontaux représentant des tranches distinctes directement corrélées à la température à l'intérieur d'une représentation visuelle d'un réservoir d'eau chaude typique avec une échelle de température, ou éventuellement, ces informations étant affichées à l'aide de diagrammes en bâtons avec des températures variables représentées par des barres de couleurs différentes ; ces présentations étant des procédés simplifiés et améliorés de présentation d'informations à l'utilisateur par rapport à une lecture de base de température d'eau chaude.

11. Appareil selon l'une quelconque des revendications précédentes, dans lequel l'agencement de traitement comprend un élément de communication à distance qui comprend, mais sans s'y limiter, les communications par courant porteur et permet au système de recevoir des demandes/commandes localement ou à distance en ce qui concerne une puissance excédentaire ou trop faible ou d'autres raisons relatives au signal de prix de l'énergie, au signal DSM, et au réglage des règles prédéfinies sur la façon de réagir aux événements ou perturbations de tension ou de fréquences, permettant ainsi au système d'agir en tant qu'élément dans un macro-système où plusieurs systèmes peuvent être commandés ensemble ou dans des groupes à des fins de gestion du réseau, tel que, mais sans s'y limiter, un événement où de grandes quantités d'énergie renouvelable excédentaire sont disponibles, de multiples systèmes peuvent être commandés pour utiliser l'énergie excédentaire et stabiliser le réseau.

12. Appareil selon l'une quelconque des revendications précédentes, dans lequel l'agencement de traitement est adapté pour recueillir des données sur les propriétés de perte de chaleur du réservoir, ces informations étant utilisées pour donner au réservoir et au système un taux d'efficacité énergétique, de préférence dans lequel l'agencement de traitement recueille des données sur les systèmes de chauffage qui produisent des contre-performances, affichent des opérations inhabituelles ou indiquent une détection de panne et présente les données localement et à distance.

13. Appareil selon l'une quelconque des revendications précédentes, dans lequel l'agencement de traitement est adapté pour identifier le prélèvement d'eau chaude du système et incorpore un élément d'apprentissage pour prédire les cycles répétés d'utilisation, ledit appareil étant adapté pour gérer de manière proactive le système en ce qui concerne le coût de l'énergie nécessaire et le temps d'utilisation pour fournir ces modèles d'utilisation, également en ce qui concerne une quantité d'eau efficace pour les imprévus qui doit être disponible en permanence pour l'utilisateur.

14. Appareil selon l'une quelconque des revendications précédentes, lesdits résultats de deux procédés, ou plus, de surveillance, d'un réservoir chaud comprenant, sans s'y limiter (A) un procédé de surveillance d'un réservoir chaud à l'aide de l'écoulement par seconde moyen ou (B) un procédé basé sur de multiples sondes de température en bas du réservoir ou (C) un procédé de réservoir stratifié simulé par ordinateur, qui possèdent des caractéristiques différentes dans différentes sections du cycle de fonctionnement combinées à un procédé de polarisation basée sur la performance d'un procédé de surveillance dans les sections du cycle de fonctionnement où des données empiriques, avec ou sans procédés statistiques, telles que l'analyse de régression, sont incorporées dans l'agencement de traitement et utilisées pour étalonner les proportions de polarisation d'un procédé de mesure par rapport à un autre ou à d'autres afin de donner un résultat plus précis que si un seul procédé était utilisé.

15. Procédé permettant d'établir une distribution de température à l'intérieur d'un réservoir d'eau chaude, le procédé utilisant un appareil destiné à gérer l'eau chaude dans un système de chauffage à stockage d'eau chaude possédant une source d'énergie et un réservoir d'eau chaude selon l'une quelconque des revendications précédentes.

**Figure 1**

**Figure 2**

Figure 3

413

412

420

414

419

415

416

418

140

417

**Figure 4**

**Figure 5**

Figure 6

711

712

**Figure 7**

811

812

150

813

814

815

816

**Figure 8**

170    711    911    150

Figure 9

**Figure 10**

**Figure 11**

**Figure 12**

141 142 143 144

**Figure 13**

**Figure 14**

951

950

926

927

928

Figure 15

**Figure 16**

apply temperature
compensation factor

Flow
detection

Y

N

update temperature
compensation factor

stratification calculations

flow rate
adjustment

tank parameter learning

electrical heating source

non-electrical heating source

error checks/corrections

calculation of available "useful"
water

Figure 17

163

Top

165

166

167

168

F(x-1)= flow loss passed to layer X from layer above

Layer X

C(x) = conduction losses for layer X

164

F(x)=flow loss passed to layer X+1 from layer X

169

F(x) = [ F(x-1) + C(x)] * R

161

162

Figure 18

**REFERENCES CITED IN THE DESCRIPTION**

**Patent documents cited in the description**

- WO 2012069497 A
- WO 2010069815 A
- US 2010004790 A
- US 2013197827 A
- US 4568821 A
- EP 2051016 A